# EUROPÄISCHE PATENTSCHRIFT

(11) **EP 1 977 917 B1**
(45) Veröffentlichungstag und Bekanntmachung des Hinweises auf die Patenterteilung: **24.10.2012**
(21) Anmeldenummer: 08000918.6
(22) Anmeldetag: 18.01.2008
(51) Int. Cl.: B60G 7/02, F16F 1/38, F16F 3/087

(54) **Lageranordnung für Fahrzeugteile, Radaufhängung sowie Verfahren zur Herstellung eines Lagegehäuses für die Lageranordnung**
Bearing arrangement for automobile components, wheel suspension and method for producing a bearing housing for the bearing arrangement
Ensemble de palier pour pièces de véhicules, suspension de roue et procédé de fabrication d'un boîtier de palier pour l'ensemble de palier

(30) Priorität: 07.04.2007 DE 102007016770
(43) Veröffentlichungstag der Anmeldung: 08.10.2008
(60) Teilanmeldung: 10014429.4
(73) Patentinhaber: AUDI AG, 85045 Ingolstadt (DE)
(72) Erfinder: Lamers, Stephan, 93336 Altmannstein (DE); Leitner, Wilfried, 85072 Eichstätt (DE)
(74) Vertreter: Asch, Konrad

(56) Entgegenhaltungen:
- EP-A1- 1 586 789
- EP-A1- 1 674 757
- WO-A1-2006/132535
- DE-A1- 3 306 432
- DE-A1- 10 221 993
- DE-A1- 10 234 046

## Beschreibung

Die Erfindung betrifft eine Lageranordnung für Fahrzeugteile nach dem Oberbegriff des Patentanspruchs 1.

Eine derartige Lageranordnung wird bei Kraftfahrzeug-Radaufhängungen zur Anlenkung von Radführungselementen, etwa einem Quer-, Längs- und/oder Trapezlenker, an einem Radträger eingesetzt. Die Lageranordnung kann aus einem radial inneren Torsionslager bestehen, das über ein radial äußeres Druck-Schublager in einem Lagergehäuse abgestützt ist. Durch entsprechende Auslegung des inneren und des äußeren Lagers können die elastokinematischen Eigenschaften der Radaufhängung gezielt gestaltet werden. Beispielhaft kann die elastische Nachgiebigkeit der Lageranordnung in einer Fahrzeugquerrichtung oder die elastische Nachgiebigkeit einer Schwenkbewegung zwischen dem Radführungselement und dem Radträger gezielt eingestellt werden.

Aus der DE 102 34 046 A1 ist eine Lageranordnung für Fahrzeugteile bekannt, und zwar mit einem radial inneren Torsionslager und einem radial äußeren Druck-Schublager, das in einem Gehäuse in einer Fahrzeughochrichtung relativ steif und in einer Fahrzeugquerrichtung relativ weich ausgebildet ist. Das Druck-Schublager ist dabei unter Vorspannung in einem Aufnahmeauge eines äußeren Lagergehäuses abgestützt.

Die aus der DE 102 34 046 A1 bekannte Lageranordnung weist eine große Anzahl von Lagerkomponenten auf, deren Zusammenbau fertigungstechnisch aufwendig ist. Umfangsseitig um einen 90°-Winkel versetzt zum Druck-Schublager sind zwischen dem Torsionslager und dem Lagergehäuse verschmutzungsanfällige offene Freiräume ausgebildet, in denen sich Schmutz- oder Eispartikel sammeln können, die die Funktionsfähigkeit beeinträchtigen können.

Aus der EP 1 674 757 A1 ist eine gattungsgemäße Lageranordnung für Fahrzeugteile bekannt. Die Lageranordnung weist ein inneres Torsionslager auf, das über ein äußeres Lager elastisch nachgiebig in einem Aufnahmeauge gelagert ist. Zur Verdrehsicherung ist das Aufnahmeauge im Querschnitt ellipsenförmig ausgebildet.

Die Aufgabe der Erfindung besteht darin, eine Lageranordnung für Fahrzeugteile bereitzustellen, die einen einfachen Aufbau aufweist und funktionssicher ist.

Die Aufgabe der Erfindung ist durch den Patentanspruch **1** gelöst. Vorteilhafte Weiterbildungen der Erfindung sind in den jeweiligen abhängige Ansprüchen offenbart.

Gemäß dem Patentanspruch 1 ist ein inneres Torsionslager über ein äußeres Lager im Aufnahmeauge abgestützt. Dabei ist das äußere Lager in einer Formschlussverbindung mit dem Aufnahmeauge. Die Formschlussverbindung gewährleistet eine Verdrehsicherung der Lageranordnung im Aufnahmeauge. Dadurch kann selbst bei einer reduzierten Vorspannung des im Aufnahmeauge abgestützten Lagers bei einer Torsionsbelastung des Torsionslagers eine genaue Lagerpositionierung aufrechterhalten und ein Wandern des Torsionslagers im Aufnahmeauge verhindert werden.

Bevorzugt ist die Formschlussverbindung eine Feder-Nut-Verbindung bzw. eine feder-/nutartige Verbindung, bei der ein Drehanschlag in eine zugeordnete Vertiefung einragt.

Für eine lagegenaue Positionierung ist es von Vorteil, wenn das äußere Lager zwei einander radial gegenüberliegende Außenteile aufweist, über die das Torsionslager unter Vorspannung im Aufnahmeauge abgestützt ist. In diesem Fall kann zwischen jedem der Außenteile und dem jeweils zugeordneten Anpressabschnitt des Aufnahmeauges eine erfindungsgemäße Formschlussverbindung vorgesehen sein.

Die erfindungsgemäße Formschlussverbindung ist insbesondere vorteilhaft, wenn das radial äußere Lager nicht über einen geschlossenen Außenring im Aufnahmeauge eingepresst ist, sondern anstelle dessen voneinander beabstandete, separate Außenteile aufweist, die umfangsseitig über Freiräume voneinander beabstandet sind. Speziell bei einer solchen Lageranordnung besteht die Gefahr, dass bei gleichzeitiger Torsions- und Querbelastung das jeweilige Druck-Schublager-Außenteil innerhalb des Aufnahmeauges in Umfangsrichtung wandert, sofern keine Formschlussverbindung vorgesehen ist.

Bevorzugt kann bei der Formschlussverbindung der Drehanschlag im Aufnahmeauge ausgebildet sein und in eine zugeordnete Vertiefung des jeweiligen druckfesten Lager-Außenteiles einragen. Dabei kann das äußere Lager ein vorzugsweise flach ausgebildetes Elastomerlager sein, in dem zur Einstellung der Lagersteifigkeit steife/harte flächige Zwischenelemente eingelegt sein können. Beispielhaft kann das äußere Lager ein kompaktes Elastomer/Zwischenblech-Scheibenpaket. Die Vertiefung kann dabei in einem druckfesten Außenteil ausgebildet sein, das mit entsprechend erhöhter Materialstärke ausgeführt ist. Die Form der Vertiefung kann so ausgeführt sein, dass sich das Lager spiegelsymmetrisch verbauen lässt, kann aber durch gezielte asymmetrische Anordnung der Außenteil-Konturen einen richtungs- und lagegebundenen Einbau der Lageranordnung erzwingen (Schlüssel-Schlüsselloch-Prinzip).

Gemäß einer besonderen Ausführungsform können die in die Vertiefung ragenden Drehanschläge der Formschlussverbindung im Profil im wesentlichen dreieckförmig mit zwei zueinander schräg gestellten seitlichen Sperrflanken ausgebildet sein. Ein solches Anschlag-Profil ergibt sich fertigungstechnisch in einfacher Weise bei einer Bearbeitung des Aufnahmeauges mittels eines rotierenden Fräswerkzeugs, das das Aufnahmeauge aus einem Träger teil fräst. Als Trägerteil kann ein Fahrzeug-Radträger vorgesehen sein.

Bei der Fräsbearbeitung des Aufnahmeauges ist eine einfache Bewegungsführung des Fräswerkzeugs vorteilhaft, um das Aufnahmeauge mit einer Freiformkontur zu versehen. Vor diesem Hintergrund folgt erfindungsgemäß das Fräswerkzeug näherungsweise dem Verlauf einer Umfangslinie, die sich durch zwei benachbarte, sich überschneidende Ellipsen ergibt.

Für eine zuverlässige Verdrehsicherung kann das Aufnahmeauge zwei diametral gegenüberliegende Drehanschläge aufweisen. Die Sperrflanken der Drehanschläge können dabei - bedingt durch die Fräsbearbeitung - leicht geschwungen sein.

Bevorzugt kann der Drehanschlag ein in Lager-Axialrichtung langgestreckter Steg sein. Der langgestreckte Steg dient dabei als eine Einführhilfe beim Einsetzen der Lageranordnung in das Aufnahmeauge.

Das als ein Torsionslager ausgebildete innere Lager, kann ein Innenteil, etwa eine innere Lagerhülse, sowie ein Außenteil aufweisen. Zwischen dem Innenteil und dem Außenteil des Torsionslagers kann eine Elastomerschicht anvulkanisiert oder auf sonstige Weise zwischengesetzt sein.

Für eine einfache Vorspannung der Elastomerschicht zwischen dem Außenteil und dem Innenteil des Torsionslagers kann das Außenteil einen Schlitz aufweisen bzw. aus zwei Halbschalen besteht, die die innere Lagerhülse des Tor sionslagers in etwa hälftig umgreifen. Im demontierten Zustand können die beiden Halbschalen voneinander über einen Spalt beabstandet sein. Nach dem Einschieben der Lageranordnung in das Aufnahmeauge können die Halbschalen bzw. kann der Schlitz des Torsionslagers unter Vorspannung zusammengedrückt sein, wodurch der Spalt geschlossen ist.

Bevorzugt können die beiden Halbschalen mit ihren, einander zugewandten Stirnseiten mittels Formschlussverbindung miteinander gekoppelt werden. Dadurch ist eine belastungsbedingte Querverschiebung der beiden Halbschalen verhindert. So kann bei einer Lagerbelastung die Halbschale der Zugseite einen Teil der sich ergebenden Querkräfte der Halbschale der Druckseite übernehmen, wodurch die zugseitige Halbschale entlastet wird. Ebenso werden belastungsbedingte Spreizkräfte, die auf die eine Halbschale in Querrichtung wirken, von der anderen Halbschale aufgenommen. Die Formschlussverbindung kann bevorzugt eine Feder-Nut-Verbindung sein.

Nachfolgend ist ein Ausführungsbeispiel der Erfindung anhand der beigefügten Figuren beschrieben. Es zeigen:
- Fig. 1: in einer Explosionsdarstellung eine Radaufhängung für ein Kraftfahrzeug mit einem Radträger und einem unteren Trapezlenker;
- Fig. 2: in Seitenansicht eine in Ruhelage gezeigte Lageranordnung zur Anlenkung des Trapezlenkers am Radträger;
- Fig. 3: eine Einzelheit A aus der Fig. 2;
- Fig. 4: die Lageranordnung in Schnittansicht;
- Fig. 5: in einer schematischen Teilschnittdarstellung den Radträger mit daran montiertem Trapezlenker;
- Fig. 6: die Einzelheit B aus der Fig. 5 in vergrößerter Ansicht;
- Fig. 7: die Lageranordnung in Einbaulage im Radträger;
- Fig. 8: die Lageranordnung in Ruhelage mit einem Teilschnitt durch das obere Druck-Schub-Lager;
- Fig. 9: einen Fräsbearbeitungsschritt zur Herstellung eines Aufnahmeauges für die Lageranordnung;
- Fig. 10: eine Prinzipskizze der Lageranordnung im Aufnahmeauge des Radträgers; und
- Fig. 11: eine Darstellung einer nicht von der Erfindung umfassten Variante der Lageranordnung im Aufnahmeauge entsprechend der Fig. 10.

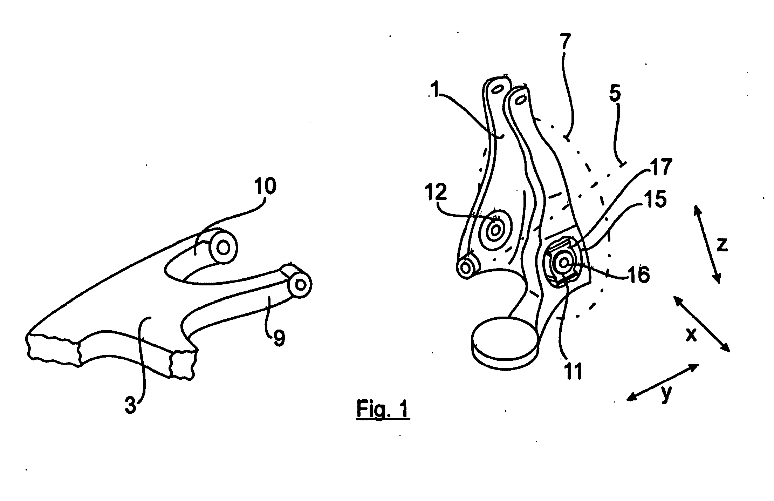

In der **Fig. 1** ist in einer schematischen Explosionsdarstellung eine Radaufhängung mit einem Radträger 1 und einem zugeordneten unteren Trapezlenker 3 gezeigt. Der Radträger 1 trägt ein um die Drehachse 5 drehbar gelagertes, nicht dargestelltes Fahrzeugrad. In der **Fig. 1** ist strichpunktiert eine zugeordnete Bremsscheibe 7 angedeutet. Der Trapezlenker 3 weist gemäß der **Fig. 1** zwei in Fahrzeuglängsrichtung x beabstandete Lenkerarme 9 und 10 auf, die im montierten Zustand jeweils an zugeordneten Lagern 11, 12 des Radträgers 1 schwenkbar angelenkt sind.

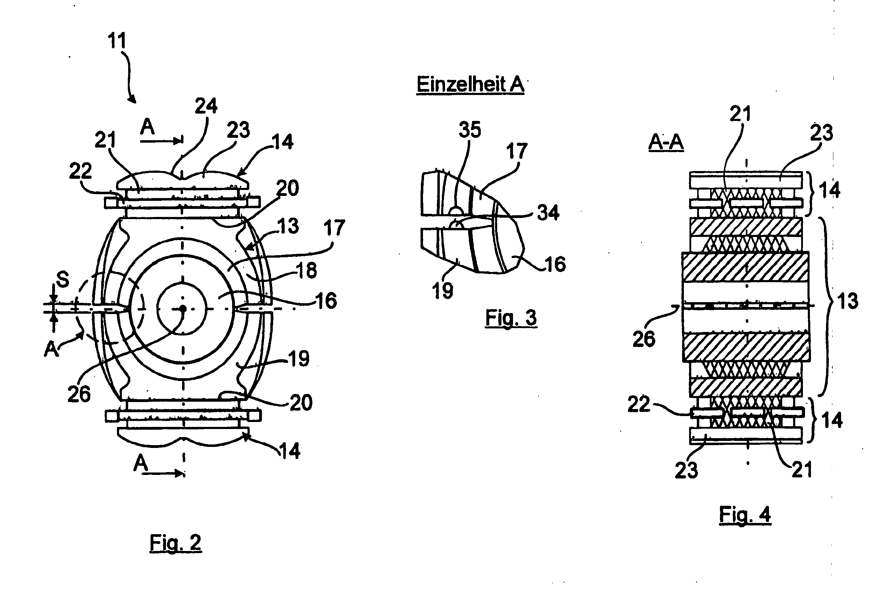

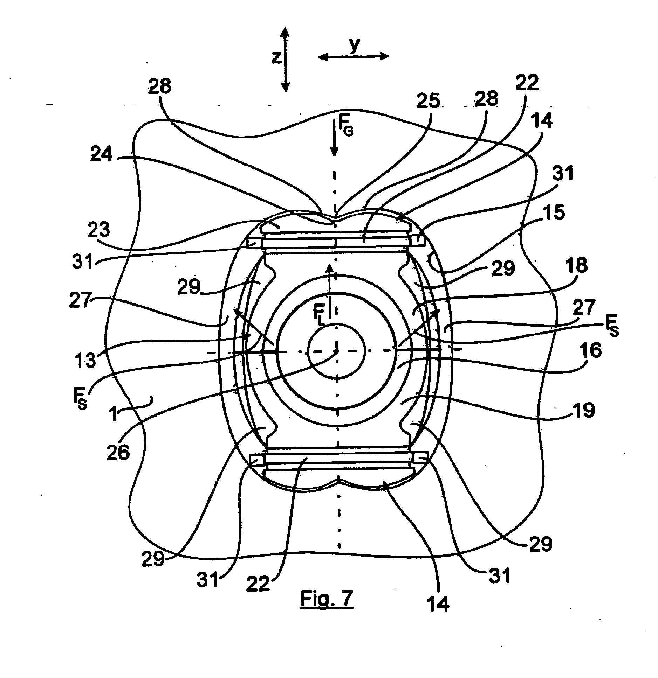

Zur Bereitstellung vorgegebener elastokinematischer Eigenschaften der Radaufhängung sind die Federkennungen der Lager 11, 12 entsprechend ausgelegt. So ist das Lager 11 gemäß der Fig. 2 eine Lageranordnung bestehend aus einem radial inneren Torsionslager 13 und einem radial äußeren Druck-Schublager 14. Das innere Torsionslager 13 ist in Einbaulage über das radial äußere Druck-Schublager 14 elastisch nachgiebig in einem Aufnahmeauge 15 des Radträgers 1 unter Vorspannung abgestützt, wie es beispielhaft aus den **Fig. 1** **oder** **7** hervorgeht.

Das radial innere Torsionslager 13 weist gemäß der **Fig. 2** als Innenteil eine innere Lagerhülse 16 sowie ein Außenteil 18, 19 auf, die über eine anvulkanisierte Elastomerschicht 17 miteinander verbunden sind. Um eine einfache Vorspannung der Elastomerschicht 17 beim Einschieben der Lageranordnung in das Lagerauge 15 zu gewährleisten, ist das Außenteil zweigeteilt mit den beiden gegenüberliegenden Halbschalen 18, 19. Die beiden Halbschalen 18, 19 sind brückenartig gestaltet und übergreifen jeweils hälftig die innere Lagerhülse 16. In dem, in der **Fig. 2** gezeigten demontierten Zustand sind die beiden Halbschalen 18, 19 an ihren einander gegenüberliegenden Stirnseiten über einen Spalt s voneinander beabstandet. Jede der Halbschalen 18, 19 weist außenseitig einander gegenüberliegende, plane Außenwände 20 auf, an denen jeweils ein Scheibenpaket als das Druck-Schublager 14 anvulkanisiert ist. Wie aus der **Fig. 4** hervorgeht, weist jedes der beiden Scheibenpakete 14 eine Elastomerschicht 21 auf, die mittels eines Zwischenblechs 22 zweigeteilt ist. Das Zwischenblech 22 ist mit Durchgangsöffnungen versehen, über die die beiden Elastomerteilschichten einstückig und materialeinheitlich verbunden sind.

Radial außenseitig ist an der Elastomerschicht 21 des jeweiligen Scheibenpakets 14 ein wellenförmig profiliertes Außenteil 23 mit einer mittigen Vertiefung 24 anvulkanisiert. Die Lageranordnung 11 stützt sich daher über die wellenförmig profilierten Außenteile 23 des Druck-Schublagers im Aufnahmeauge 15 ab.

Beim Einbau der Lageranordnung 11 in das Aufnahmeauge 15 des Radträgers 1 wird die Lageranordnung 11 an seinen gegenüberliegenden Außenteilen 23 zusammengepresst und unter Vorspannung in das Aufnahmeauge 15 eingeschoben. Dabei greifen die Vertiefungen 24 der Außenteile 23 formschlüssig in korrespondierende Führungsstege 25 des Aufnahmeauges 15. Die Führungsstege 25 sind einander gegenüberliegend im Aufnahmeauge 15 ausgebildet. Sie erstrecken sich entlang der Lagerachse 26 und ragen als Einführhilfe jeweils in die Vertiefungen 24 der Außenteile 23. Im in der **Fig. 7** gezeigten Einbauzustand die beiden Halbschalen 18, 19 an ihren zugewandten Stirnseiten in Anlage gedrückt, so dass der Spalt s geschlossen ist.

Wie aus der **Fig. 7** weiter hervorgeht, sind umfangsseitig um einen 90°-Winkel versetzt zu den beiden gegenüberliegenden Scheibenpaketen 14 jeweils gegenüberliegende Freiräume 27 zwischen dem Torsionslager 13 und dem Aufnahmeauge 15 vorgesehen. Die beiden Freiräume 27 ermöglichen bei einer Schubbelastung der eingebauten Lageranordnung 11 in der Fahrzeugquerrichtung y gezielte Leerwege des Torsionslagers 13. Das Torsionslager 13 ist daher bei einer Belastung in der Fahrzeugquerrichtung y elastisch nachgiebig verschiebbar. Zur Unterstützung dieser elastischen Nachgiebigkeit können sich die Elastomerschichten 21 und Zwischenbleche 22 der Scheibenpakete 14 in der y-Richtung elastisch gegeneinander verschieben. Demgegenüber sind die Scheibenpakete 14 in Fahrzeughochrichtung z mit großer Federsteifigkeit druckfest ausgelegt.

Die beiden gegenüberliegenden Führungsstege 25 des Aufnahmeauges 15 ragen, wie bereits erwähnt, nach Art einer Feder-Nut-Verbindung formschlüssig in die zugeordneten Vertiefungen 24 der Außenteile 23. Die Führungsstege 25 wirken dabei bei einer Torsionsbelastung wie Drehanschläge zur Verdrehsicherung der im Aufnahmeauge 15 gelagerten Lageranordnung 11. Die Führungsstege 25 sind im Profil im wesentlichen dreieckförmig gestaltet mit jeweils schräg gestellten seitlichen Sperrflanken 28, die umfangsseitig gegen die lagerseitigen Vertiefungen 24 drücken.

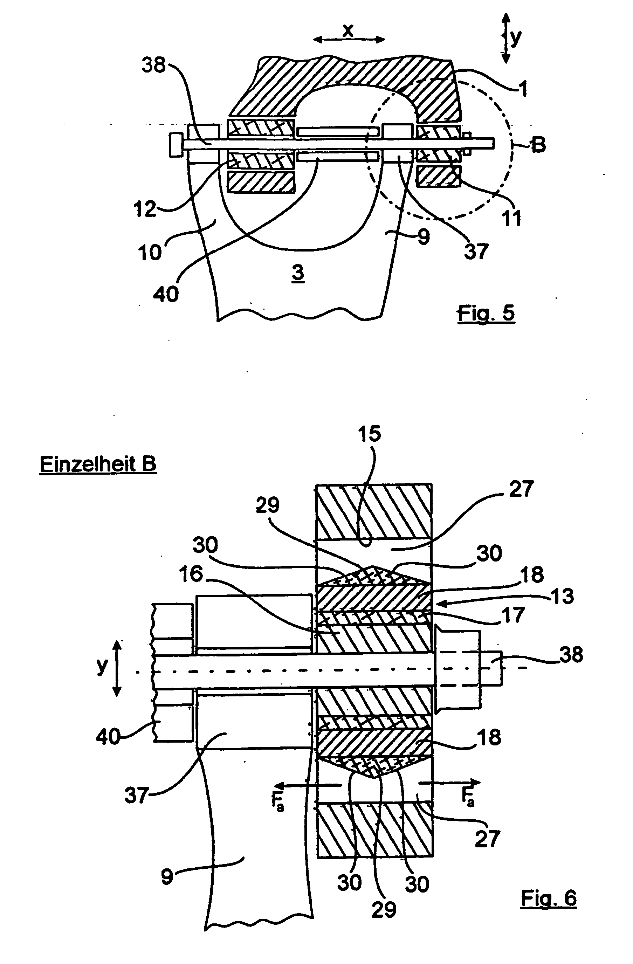

Gemäß der **Fig. 7** sind die in der Schub-Richtung bzw. y-Richtung vorgesehenen Freiräume 27 in etwa sichelförmig mit einem ausgebauchten Mittelbereich sowie spitzwinklig zulaufenden Endbereichen gebildet. Die torsionslagerseitige Begrenzungswand des jeweiligen Freiraums 27 ist mit einer konturierten Elastomerschicht 29 bedeckt. Das Profil der Elastomerschicht 29 ist in der Schnittansicht gemäß der **Fig. 6** gezeigt. Demzufolge weist die Elastomerschicht 29 eine zum Aufnahmeauge 15 weisende Keilkontur mit zwei sich in Lager-Axialrichtung keilförmig erstreckenden Ausschubflächen 30 auf. Die derart konturierte Elastomerschicht 29 bildet erfindungsgemäß ein Ausschubelement, das in den Freiraum 27 ragt. Bei einer Schubbewegung des Torsionslagers 13 in der Fahrzeugquerrichtung y, d. h. in der **Fig. 6** vertikal nach unten, üben daher die Ausschubflächen 30 eine Axial-Kraftkomponente Fₐ auf Schmutz und/oder Eis aus, das sich im Freiraum 27 festgesetzt hat. Auf diese Weise wird Schmutz und/oder Eis aus dem Freiraum 27 herausgedrückt.

Als zusätzliche Maßnahme, die Freiräume 27 verschmutzungsfrei und daher funktionsfähig zu halten, ist gemäß der **Fig. 7** an jedem der Zwischenbleche 22 beidseitig eine Elastomer-Dichtlippe 31 anvulkanisiert. Die Dichtlippe 31 ragt dabei mit ihrem freien Ende in den jeweiligen Freiraum 27 bis etwa in Anlage mit der gegenüberliegenden Innenwand des Aufnahmeauges 15. Auf diese Weise ist der spitzwinklig zulaufende Endbereich des sichelförmigen Freiraums 27 vom ausgebauchten Freiraum-Mittelbereich abgeschirmt. Die Dichtlippe 31 verhindert somit ein Verklemmen von Steinen im spitzwinklig zulaufenden Freiraum-Endbereich. Ein derartiges Verklemmen würde eine in Fahrzeugquerrichtung y erfolgende Schub- oder Druckbewegung der Scheibenpakete 14 behindern und so die elastische Nachgiebigkeit der Lageranordnung 11 in der Fahrzeugquerrichtung y beeinträchtigen.

Nachfolgend wird anhand der **Fig. 7** die Lastverteilung in der Lageranordnung 11 beschrieben, wenn die Lagerhülse 16 mit einer Kraft F_{L} vertikal nach oben gegen das Aufnahmeauge 15 drückt.

In diesem Fall wird vom Aufnahmeauge 15 eine Gegenkraft F_{G} über das obere Scheibenpaket 14 in die obere Halbschale 18 eingeleitet. Für einen günstigen Lasteintrag in die obere Halbschale 18 ist es von Vorteil, die zentrische Belastung der Halbschale 18 zu reduzieren und anstelle dessen Lasteinträge in Querrichtung y beabstandet zur Lagerachse 26 zu erhöhen. Dadurch können auf die seitlichen Arme der Halbschale 18 wirkende Spreizkräfte F_{S} reduziert werden. Die Spreizkräfte F_{S} wirken auf die seitlichen Arme der jeweiligen Halbschale 18, 19 insbesondere bei einer zentrischen Belastung der Halbschalen 18, 19 und können zu einem Schalenbruch führen.

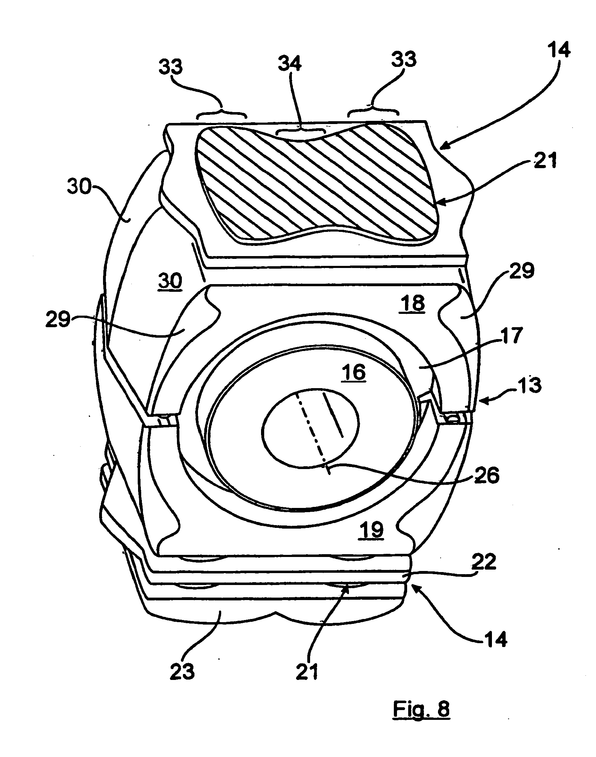

Die oben erwähnten günstigen Lasteinträge werden erfindungsgemäß durch die besondere Flächengeometrie der Elastomerschicht 21 des Scheibenpakets 14 erreicht, wie sie in der Teilschnittdarstellung der **Fig. 8** gezeigt ist.

Demzufolge weist die Elastomerschicht 21 zwei voneinander beabstandete großflächige Flächenbereiche 33 auf. Die beiden Flächenbereiche 33 sind voneinander quer zur Lagerachse 26 vorzugsweise symmetrisch beabstandet und über einen schmäleren Verbindungssteg 34 miteinander verbunden. Über die beiden großflächigen, symmetrisch angeordneten Flächenbereiche 33 der Elastomerschicht 21 erfolgen beidseitig der Lagerachse 26 hohe Lasteinträge in die Lagerschale 18, während die zentrische Belastung der Lagerschale 18 aufgrund des schmäleren Verbindungsstegs 34 reduziert ist. Entsprechend ist der mittlere, zentrische Bereich der Halbschale 18 entlastet, so dass die Gefahr einer Spreizung der Halbschale 18 radial nach außen reduziert ist.

Im Einbauzustand sind die Flächenschwerpunkte der Flächenbereiche 33 und 34 möglichst nahe über den Lagertrennstellen 13 positioniert, um die Biegemomente in den Lagerschalen 18, 19 gering zu halten.

Die der unteren Halbschale 19 zugeordnete Elastomerschicht 21 ist identisch zur oberen Elastomerschicht 21 ausgebildet. Bei einer entsprechenden Krafteinleitung vom Aufnahmeauge 15 in die untere Halbschale 19 würde daher ebenfalls ein günstiger Lasteintrag erfolgen.

Die zu einem Schalenbruch führende Spreizung der Halbschalen 18, 19 wird darüber hinaus durch die in der **Fig. 3** vergrößert dargestellten Formschlussverbindung 34, 35 zwischen den gegenüberliegenden Stirnseiten der Halbschalen 18, 19 des Torsionslagers 13 reduziert. Gemäß der **Fig. 3** ist die Formschlussverbindung eine Feder-Nut-Verbindung, bei der ein stirnseitiger Vorsprung 34 der unteren Halbschale 19 im eingebauten Zustand der Lageranordnung 11 mit einer stirnseitigen Nut 35 der oberen Halbschale 18 formschlüssig in Eingriff ist. Dadurch ist ein passgenauer Sitz der beiden Halbschalen 18, 19 im montierten Zustand erreicht. Außerdem kann bei einer Schub-Druck-Lagerbelastung die Halbschale der Zugseite einen Teil der Querkräfte der Halbschale der Druckseite übernehmen, wodurch diese entlastet wird. Da keine Querverschiebung zwischen den beiden Halbschalen 18, 19 möglich ist, wird die Spreizung der Halbschalen 18, 19 reduziert.

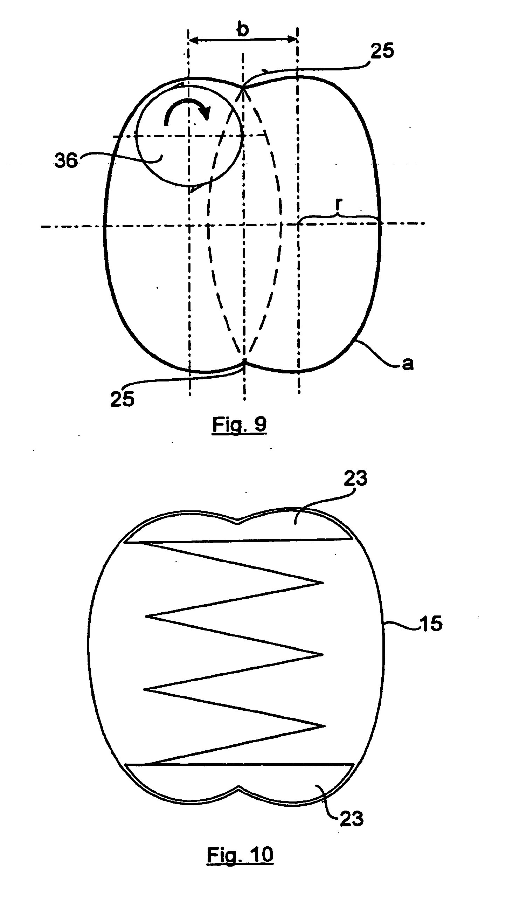

Wie aus der **Fig. 1** und der **Fig. 7** hervorgeht, ist die Lageranordnung 11 ohne Zwischenschaltung eines zusätzlichen Lagergehäuses unmittelbar im Radträger 1 eingeschoben. Das Aufnahmeauge 15 für die Lageranordnung 11 ist dabei fertigungstechnisch einfach in einem Fräsbearbeitungsschritt hergestellt, wie er in der **Fig. 9** angedeutet ist. Demzufolge wird das Aufnahmeauge 15 mittels eines Fräswerkzeugs 36 einer beispielsweise CNC-gesteuerten Fräsmaschine konturiert. Bei der Gestaltung der Innenkontur mit den gegenüberliegenden wellenartigen Führungsstegen 25 ist das Fräswerkzeug 36 derart bewegungsgesteuert, dass es den Verlauf einer hervorgehobenen Umfangslinie a um zwei identische, jedoch seitlich versetzte Ellipsen folgt, die sich überschneiden. Das Versatzmaß b zwischen den beiden Ellipsen ist dabei größer als ein Seitenradius r der beiden Ellipsen. Die erzeugte Kontur erlaubt einerseits die formschlüssige Verbindung zwischen Lager und Aufnahmeauge und andererseits den freien Bewegungsraum für das Torsionslager.

Die Anlenkung des unteren Trapezlenkers 3 mit seinen beiden Lenkerarmen 9, 10 am Radträger 1 geht aus den beiden **Fig. 5 und 6** hervor. Demzufolge liegt der Lenkerarm 9 des Trapezlenkers 3 mit seinem Befestigungsauge 37 stirnseitig an der inneren Lagerhülse 16 des Torsionslagers 13 an. Das Befestigungsauge 37 des Lenkerarms 9 ist mittels eines Schraubbolzens 38 drehfest mit der inneren Lagerhülse 16 verklemmt. Der Schraubbolzen 38 erstreckt sich dabei in der Fahrzeuglängsrichtung x auch durch das beabstandete zweite radträgerseitige Lager 12, das ebenfalls über den Schraubbolzen 38 mit dem zweiten Lenkerarm 10 in Klemmverbindung ist. Das Lager 12 ist in Fahrzeuglängsrichtung x steif ausgebildet.

Gemäß der **Fig. 5** ist zwischen dem Befestigungsauge 37 des Lagerarms 9 und dem zweiten Lager 12 eine Abstandshülse 40 zwischengesetzt, durch die sich der Schraubbolzen 38 erstreckt. Die Abstandshülse 40 stützt sich zwischen dem Befestigungsauge 37 des Lenkerarms 9 und dem Lager 12 ab. Auf diese Weise ist der Trapezlenker 3 über seinen ersten Lagerarm 9 an der Lageranordnung 11 elastisch nachgiebig in der Fahrzeugquerrichtung y und der Fahrzeughochrichtung z gelagert. Demgegenüber ist der Trapezlenker 3 über seinen zweiten Lenkerarm 10 am zweiten Lager 12 in der Fahrzeuglängsrichtung x steif gelagert, um insgesamt die gewünschte elastokinematischen Eigenschaften der Radaufhängung zu erzielen.

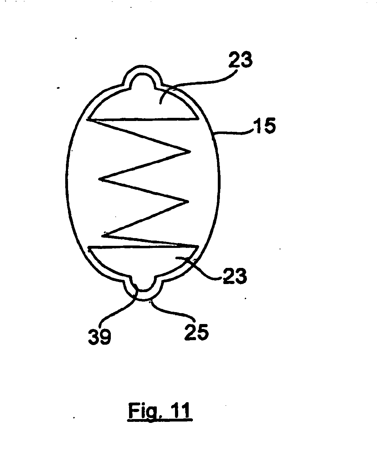

In der **Fig. 11** sind gemäß einer Variante der Erfindung die Drehanschläge 25 nicht als Vorsprünge im Aufnahmeauge 15 vorgesehen, sondern als in das Aufnahmeauge 15 eingefräste Nuten. So sind die Außenteile 23 mit Vorsprüngen 39 versehen, die entsprechend der vorangegangenen Figuren, in die jeweiligen Nuten 25 des Aufnahmeauges eingepresst sind.

Die **Fig. 11** ist wie die **Fig. 10** lediglich eine Prinzipskizze ohne detaillierte Darstellung des inneren Torsionslagers 13 sowie des äußeren Druck-Schublagers 14. Die in den **Figuren 1 bis 10** beschriebene Lageranordnung ist jedoch in entsprechender Weise auch mit dem gemäß der **Fig. 11** konturierten Aufnahmeauge 15 realisierbar. Darüber hinaus kann das Aufnahmeauge im Unterschied zu der näherungsweise ellipsenförmigen Kontur der **Fig. 11** bzw. der in den vorangegangenen Figuren angedeuteten Kontur jegliche andere Freiformkontur aufweisen.

## Patentansprüche

1. Lageranordnung für Fahrzeugteile, insbesondere für ein an einem Radträger (1) angelenktes Radführungselement (3), mit einem inneren Torsionslager (13) bzw. einem Torsions-Gleitlager, das über zumindest ein äußeres Lager (14) elastisch nachgiebig in einem Aufnahmeauge (15) gelagert ist, wobei das äußere Lager (14) in Umfangsrichtung über eine Formschluss-Verbindung (24, 25) im Aufnahmeauge (15) abgestützt ist, **dadurch gekennzeichnet, dass** die Innenkontur des Aufnahmeauges (15) im Profil näherungsweise dem Verlauf einer Umfangslinie (a) um zwei seitlich versetzte und sich überschneidende Ellipsen entspricht.

2. Lageranordnung nach Anspruch 1, **dadurch gekennzeichnet, dass** die Formschlussverbindung eine Feder-Nut-Verbindung ist, bei der ein Drehanschlag (25) formschlüssig in eine zugeordnete Vertiefung (24) einragt.

3. Lageranordnung nach Anspruch 1 oder 2, **dadurch gekennzeichnet, dass** das äußere Lager (14) über zwei einander radial gegenüberliegende Außenteile (23) im Aufnahmeauge (15) abgestützt ist.

4. Lageranordnung nach Anspruch 3, **dadurch gekennzeichnet, dass** umfangsseitig versetzt zu den beiden gegenüberliegenden Lager-Außenteilen (23) zwischen dem Torsionslager (13) und dem Aufnahmeauge (15) Freiräume (27) vorgesehen sind.

5. Lageranordnung nach einem der Ansprüche 2 bis 4, **dadurch gekennzeichnet, dass** der Drehanschlag (25) im Aufnahmeauge (15) ausgebildet ist, und die zugeordnete Vertiefung (24) im Außenteil (23) des äußeren Lagers (14) ausgebildet ist.

6. Lageranordnung nach einem der vorhergehenden Ansprüche, **dadurch gekennzeichnet, dass** das äußere Lager (14) aus mindestens einem im wesentlichen flächig ausgebildetem Druck-Schublager besteht, das in Schubrichtung (X, 9) eine deutlich kleine Federsteifigkeit aufweist als in Druckrichtung (Z), vorzugsweise bestehend aus mindestens einer scheibenförmig ausgebildeten Elastomerschicht (21), in der vorzugsweise hochsteife Zwischenelemente (22) eingelagert sind.

7. Lageranordnung nach einem der Ansprüche, 2 bis 6 **dadurch gekennzeichnet, dass** der Drehanschlag (25) im Profil im wesentlichen dreieckförmig mit zwei schräg gestellten seitlichen Sperrflanken (28) ist.

8. Lageranordnung nach einem der Ansprüche 2 bis 7, **dadurch gekennzeichnet, dass** der Drehanschlag (25) ein in Lager-Axialrichtung langgestreckter Steg ist.

9. Lageranordnung nach einem der Ansprüche 4 bis 8, **dadurch gekennzeichnet, dass** der Freiraum (27) im Seitenprofil sichelförmig gebildet ist mit einem ausgebauchten Mittelbereich und spitzwinklig zulaufenden Endbereichen.

10. Lageranordnung nach einem der vorhergehenden Ansprüche, **dadurch gekennzeichnet, dass** das Torsionslager (13) ein Innenteil (16), insbesondere eine innere Lagerhülse, sowie ein Außenteil (18, 19) mit zwischengesetzter Elastomerschicht (17) aufweist.

11. Lageranordnung nach Anspruch 10, **dadurch gekennzeichnet, dass** das Außenteil des Torsionslagers (13) zwei Halbschalen (18, 19) aufweist, die die innere Lagerhülse (16) des Torsionslagers (13) in etwa hälftig umgreifen.

12. Lageranordnung nach Anspruch 11, **dadurch gekennzeichnet, dass** die Halbschalen (18, 19) mit ihren einander zugewandten Stirnseiten über eine Formschlussverbindung (34, 35) miteinander koppelbar sind.

13. Lageranordnung nach einem der Ansprüche 11 oder 12, **dadurch gekennzeichnet, dass** im nicht eingebauten Zustand die Halbschalen (18, 19) des Torsionslagers (13) über einen Spalt (s) voneinander beabstandet sind, der im Einbauzustand im wesentlichen geschlossen ist.

14. Lageranordnung nach Anspruch 12 oder 13, **dadurch gekennzeichnet, dass** die Formschlussverbindung (34, 35) eine Feder-Nut-Verbindung ist.

15. Lageranordnung nach einem der vorhergehenden Ansprüche, **dadurch gekennzeichnet, dass** das Aufnahmeauge (15) in einem Fräsbearbeitungsschritt hergestellt ist.

16. Lageranordnung nach Anspruch 2 und Anspruch 15, **dadurch gekennzeichnet, dass** der Drehanschlag (25) eine in das Aufnahmeauge (15) gefräste Nut oder ein Steg ist.

## Claims

1. Bearing arrangement for vehicle parts, more particularly for a wheel guidance element (3) coupled to a wheel carrier (1), comprising an internal torsion bearing (13) or a torsion plain bearing which is mounted in a resiliently flexibly manner in a receiving eyelet (15) via at least one external bearing (14), the external bearing (14) being supported in the receiving eyelet (15) in the circumferential direction via a positive connection (24, 25), **characterised in that**, in profile, the inner contour of the receiving eyelet (15) corresponds approximately to the path of a circumferential line (a) over two laterally offset and mutually intersecting ellipses.

2. Bearing arrangement according to claim 1, **characterised in that** the positive connection is a tongue and groove connection, in which a pivot stop (25) projects into an associated indentation (24) with a positive fit.

3. Bearing arrangement according to either claim 1 or claim 2, **characterised in that** the external bearing (14) is supported in the receiving eyelet (15) via two radially opposite external parts (23).

4. Bearing arrangement according to claim 3, **characterised in that** clearances (27) are provided between the torsion bearing (13) and the receiving eyelet (15), circumferentially offset from the two opposite external parts (23) of the bearing.

5. Bearing arrangement according to any of claims 2 to 4, **characterised in that** the pivot stop (25) is formed in the receiving eyelet (15) and the associated indentation (24) is formed in the external part (23) of the external bearing (14).

6. Bearing arrangement according to any of the preceding claims, **characterised in that** the external bearing (14) consists of at least one substantially planar pressure-thrust bearing which has a considerably lower spring rigidity in the thrust direction (X, 9) than in the pressure direction (Z), preferably consisting of at least one disc-shaped elastomer layer (21) in which preferably highly rigid intermediate elements (22) are embedded.

7. Bearing arrangement according to any of claims 2 to 6, **characterised in that**, in profile, the pivot stop (25) is substantially triangular, having two lateral locking flanks (28) placed at an angle.

8. Bearing arrangement according to any of claims 2 to 7, **characterised in that** the pivot stop (25) is a web elongated in the axial direction of the bearing.

9. Bearing arrangement according to any of claims 4 to 8, **characterised in that** the lateral profile of the clearance (27) is crescent-shaped, having a bulging central region and end regions which taper to a point.

10. Bearing arrangement according to any of the preceding claims, **characterised in that** the torsion bearing (13) comprises an internal part (16), more particularly an internal bearing sleeve, and an external part (18, 19) comprising an elastomer layer (17) placed therebetween.

11. Bearing arrangement according to claim 10, **characterised in that** the external part of the torsion bearing (13) comprises two half shells (18, 19) which encompass approximately half of the internal bearing sleeve (16) of the torsion bearing (13).

12. Bearing arrangement according to claim 11, **characterised in that** the half shells (18, 19) can be coupled to each other, via a positive connection (34, 35), by their end faces which face each other.

13. Bearing arrangement according to either claim 11 or claim 12, **characterised in that**, when not installed, the half shells (18, 19) of the torsion bearing (13) are spaced apart from each other by a gap (s) which is substantially closed when installed.

14. Bearing arrangement according to either claim 12 or claim 13, **characterised in that** the positive connection (34, 35) is a tongue-and-groove connection.

15. Bearing arrangement according to any of the preceding claims, **characterised in that** the receiving eyelet (15) is produced in a milling processing step.

16. Bearing arrangement according to claim 2 and claim 15, **characterised in that** the pivot stop (25) is either a groove which is milled into the receiving eyelet (15) or a web.

## Revendications

1. Aménagement de palier pour pièces de véhicule automobile, en particulier pour un élément de guidage de roue (3) articulé sur une suspension de roue (1), avec un palier de torsion interne (13) ou un palier de torsion lisse qui est monté sur au moins un palier externe (14) de façon élastique dans un oeillet récepteur (15), dans lequel le palier externe (14) s'appuie dans la direction périphérique sur une liaison mécanique (24, 25) dans l'oeillet récepteur (15), **caractérisé en ce que** le contour interne de l'oeillet récepteur (15) correspond en profil approximativement au tracé d'une ligne périphérique (a) qui parcourt deux ellipses décalées latéralement et qui se coupent.

2. Aménagement de palier selon la revendication 1, **caractérisé en ce que** la liaison mécanique est une liaison à languette et rainure, dans laquelle une butée rotative (25) s'engage mécaniquement dans une cavité (24) qui lui est affectée.

3. Aménagement de palier selon la revendication 1 ou la revendication 2, **caractérisé en ce que** le palier externe (14) s'appuie sur deux parties externes (23) radialement en regard l'une de l'autre dans l'oeillet récepteur (15).

4. Aménagement de palier selon la revendication 3, **caractérisé en ce que** des espaces libres (27) sont prévus décalés sur la périphérie des deux parties externes de palier (23) en regard l'une de l'autre entre le palier de torsion (13) et l'oeillet récepteur (15).

5. Aménagement de palier selon l'une quelconque des revendications 2 à 4, **caractérisé en ce que** la butée rotative (25) est formée dans l'oeillet récepteur (15) et la cavité affectée (24) est formée dans la partie externe (23) du palier externe (14).

6. Aménagement de palier selon l'une quelconque des revendications précédentes, **caractérisé en ce que** le palier externe (14) est constitué d'au moins un palier de compression-butée formée sensiblement à plat, qui présente dans la direction de butée (X, 9) une rigidité du ressort nettement plus petite que dans la direction de compression (Z), de préférence constitué d'au moins une couche d'élastomère (21) en forme de disque, dans laquelle des éléments intermédiaires (22) de préférence très rigides sont engagés.

7. Aménagement de palier selon l'une quelconque des revendications 2 à 6, **caractérisé en ce que** la butée rotative (25) est sensiblement triangulaire en profil avec deux flancs d'arrêt latéraux inclinés (28).

8. Aménagement de palier selon l'une quelconque des revendications 2 à 7, **caractérisé en ce que** la butée rotative (25) est une barrette allongée dans la direction axiale du palier.

9. Aménagement de palier selon l'une quelconque des revendications 4 à 8, **caractérisé en ce que** l'espace libre (27) est formé en croissant en profil latéral avec une zone centrale renflée et des zones d'extrémité formant des angles aigus.

10. Aménagement de palier selon l'une quelconque des revendications précédentes, **caractérisé en ce que** le palier de torsion (13) présente une partie interne (16), en particulier une douille de palier interne, ainsi qu'une partie externe (18, 19) avec une couche d'élastomère (17) disposée entre elles.

11. Aménagement de palier selon la revendication 10, **caractérisé en ce que** la partie externe du palier de torsion (13) présente deux demi-coques (18, 19), qui enserrent la douille de palier interne (16) du palier de torsion (13) environ de moitié.

12. Aménagement de palier selon la revendication 11, **caractérisé en ce que** les demi-coques (18, 19) peuvent être couplées mutuellement par leurs côtés frontaux tournés l'un vers l'autre via une liaison mécanique (34, 35).

13. Aménagement de palier selon l'une quelconque des revendications 11 ou 12, **caractérisé en ce que**, à l'état non incorporé, les demi-coques (18, 19) du palier de torsion (13) sont distantes l'une de l'autre d'un intervalle (s) qui est sensiblement fermé à l'état incorporé.

14. Aménagement de palier selon la revendication 12 ou la revendication 13, **caractérisé en ce que** la liaison mécanique (34, 35) est une liaison à languette et rainure.

15. Aménagement de palier selon l'une quelconque des revendications précédentes, **caractérisé en ce que** l'oeillet récepteur (15) est ménagé dans une étape de fraisage.

16. Aménagement de palier selon la revendication 2 et la revendication 15, **caractérisé en ce que** la butée rotative (25) est une rainure fraisée dans l'oeillet récepteur (15) ou une nervure.
